# FASCICULE DE BREVET EUROPEEN

(11) **EP 1 353 155 B1**
(45) Date de publication et mention de la délivrance du brevet: **11.10.2006**
(21) Numéro de dépôt: 03290916.0
(22) Date de dépôt: 11.04.2003
(51) Int. Cl.: G01G 15/00, G01G 23/16, B07C 5/22

(54) **Procédé et dispositif de pesage d'articles en continu, et installation correspondante pour le calibrage de coquillages**
Verfahren und Vorrichtung zum fortlaufenden Wiegen von Gegenständen und eine entsprechende Einrichtung zum Kalibrieren von zweischaligen Seetieren
Method and apparatus for continuous weighing of articles and corresponding installation for calibrating shellfish

(30) Priorité: 11.04.2002 FR 0204542
(43) Date de publication de la demande: 15.10.2003
(73) Titulaire: Tuyauterie Chaudronnerie du Contentin S.A., 50460 Querqueville (FR)
(72) Inventeur: Leroux, René, 50470 La Glacerie (FR); Rollet, Jean-Claude, 50460 Querqueville (FR)
(74) Mandataire: Degret, Jacques

(56) Documents cités:
- EP-A- 0 072 078
- EP-A- 0 478 467
- EP-A- 0 534 889
- EP-A- 0 939 307
- WO-A-01/02251
- WO-A-98/31993
- "Système de pesée automatique" MESURES REGULATION AUTOMATISME, CFE. PARIS, FR, vol. 38, no. 9, septembre 1973 (1973-09), page 37 XP002165424 ISSN: 0755-219X
- MASAAKI HIRAYAMA ET AL.: "Automatic System for measurement of net weights" JEE JOURNAL OF ELECTRONIC ENGINEERING., décembre 1972 (1972-12), pages 40-44, XP002225084 DEMPA PUBLICATIONS INC. TOKYO., JP ISSN: 0385-4507

## Description

### DOMAINE TECHNIQUE DE L'INVENTION

La présente invention concerne un procédé et un dispositif de pesage d'articles en continu, et l'installation correspondante pour le calibrage de coquillages, notamment d'huîtres.

### ARRIÈRE-PLAN TECHNOLOGIQUE DE L'INVENTION

Les procédés et dispositifs de tri automatique d'articles divers sont d'usage courant dans le secteur agro-alimentaire. Une grande variété de produits tels que fruits, légumes, volailles, poissons, coquillages, ou même fleurs, peuvent être triés automatiquement. L'installation est alimentée en continu avec les produits à trier. Leurs caractéristiques sont déterminées au cours de leur parcours dans la machine, et les produits sont ensuite restitués groupés par catégories de poids, taille, ou couleur.

Ce parcours est généralement soit rectiligne, l'installation se présentant comme un convoyeur linéaire, soit circulaire, le dispositif prenant alors la forme d'un carrousel.

Un exemple de calibreuse pour coquillages, dite "en ligne", est décrit dans la demande de brevet français FR-2.792.555 publiée le 27 octobre 2000, au nom de la société Hardouin.

Un exemple de trieuse de poissons rotative est décrit dans la demande de brevet internationale WO-01.02251 publiée le 11 janvier 2001, au nom de la société Machine Design Group.

Quant il s'agit de trier les articles par catégorie de poids, ceux-ci sont généralement placés individuellement dans des godets dont le poids est déterminé lors du passage sur une station de pesage. Pour connaître le poids net de l'article, il est bien sûr nécessaire de soustraire le poids du godet vide du poids du godet rempli. Les premières machines enlevaient une tare fixe. Mais on s'est vite aperçu que cela conduisait à des erreurs car, en cours de fonctionnement, les godets accumulent inévitablement poussières, terre, sable et résidus divers, faussant la pesée.

La demande de brevet européen EP0939307 publiée le 1^{er} septembre 1999 au nom de la société TALLERES DAUMAR décrit une machine de pesage automatique de produits alimentaires où est mis en oeuvre un procédé de détermination automatique de la tare des godets. Les moyens de pesage utilisés pour peser les godets pleins en fonctionnement normal sont utilisés également au démarrage de la machine pour peser les godets vides au cours d'un cycle de fonctionnement spécial.

On conçoit que la tare évaluée de cette façon, au début du tri, ne corresponde plus à la réalité après un certain temps de fonctionnement continu pendant lequel des résidus divers ont pu s'accumuler dans les godets.

Le brevet américain US-4.649.494 publié le 10 mars 1987, au nom de R. Rosas, expose quant à lui une méthode de tarage dynamique des godets qui permet de compenser le poids des matériaux accumulés dans les godets vides. Pour ce faire, le poids d'un godet déterminé est mémorisé quand il est inférieur à un certain seuil. On considère que cette mesure correspond à un godet qui n'a pas été rempli. Après un certain nombre de mesures, la nouvelle tare pour ce godet déterminé est calculée en faisant la moyenne.

La tare évaluée de cette façon n'est donc aussi qu'une valeur approchée de la valeur réelle pour chaque godet, et cela peut conduire à des erreurs sur le poids net de l'article quand la précision de détermination des calibres requise est très grande.

Il est un domaine d'application où le tri selon le poids doit être réalisé avec une très grande précision : il s'agit de l'industrie pharmaceutique. La demande de brevet européen EP-1.014.053 publiée le 28 juin 2000, au nom de la société japonaise Shionogi Qualicaps, concerne le tri de capsules. Une première unité de pesage permet d'effectuer le tri et, parmi les éléments triés, il est procédé à un échantillonnage. Les échantillons sont soumis à une pesée de contrôle sur une seconde unité de pesage. Le résultat sert à calibrer la première unité.

Les caractéristiques du dispositif précédemment décrit sont adaptées à de petits objets peu fragiles, les échantillons tombant par gravité sur la seconde unité de pesage. L'adaptation à des articles plus volumineux semble difficile à envisager. De plus, la calibration n'est effectuée que pour certains objets pris au hasard. Comme dans le cas de la méthode exposée dans le brevet US 4.649.494, les corrections d'erreur ne peuvent donc être qu'approximatives.

L'article intitulé « Système de pesée automatique » paru dans le volume 38, n° 9 du mois de septembre 1973 de la revue « Mesures, régulation, automatisme » décrit un système permettant d'accéder rapidement au poids net d'un produit empaqueté ou disposé dans des containers. Le dispositif fonctionne à l'aide de l'installation de deux bascules, l'une disposée avant le processus de remplissage et l'autre après. La première bascule mesure le poids de la tare et détermine toute variation autour de la valeur nominale, variation qui est ensuite mémorisée par un registre à décalage. La seconde bascule mesure toute déviation du poids brut réel par rapport à sa valeur nominale. Une unité de calcul en déduit ensuite la variation du poids net par rapport à sa valeur nominale, et classe le produit en bon ou mauvais.

L'article précité est un résumé d'une publication originale parue dans la revue « JEE-Japan Electronic Engineering » en décembre 1972. Les auteurs, M. Hirayama et autres, décrivent une chaîne d'empaquetage comportant des convoyeurs linéaires sur lesquels circulent les emballages. Une bascule automatique est disposée entre le convoyeur d'entrée et un convoyeur de liaison avec le poste de remplissage, d'une part, et une autre bascule automatique est placée entre un second convoyeur de liaison et le convoyeur de sortie, d'autre part. Ces deux bascules déterminent respectivement la tare et le poids brut du produit.

Un tel système est capable de déterminer en temps réel un poids net dans le but de rejeter des produits hors tolérances après l'opération de remplissage, mais il n'est pas adapté au tri automatique d'articles selon plusieurs critères. En particulier, la disposition des postes de pesée à distance du poste de remplissage peut être la source d'erreurs et l'agencement linéaire, donc ouvert, de la chaîne conduit à un système peu compact.

Une détermination en temps réel du poids net d'un article au moyen de deux dispositifs de pesée est aussi mis en oeuvre dans la trieuse rotative décrite dans la demande de brevet européen EP-0.072.078 publiée le 16 février 1983 au nom de la Société Unilever. Cette trieuse comporte un disque tournant entraînant au moyen de bras radiaux vingt réceptacles s'étendant selon des secteurs circulaires et destinés à recevoir des articles allongés, de taille relativement importante, notamment des poissons. Les capteurs de poids sont disposés simplement sur deux faces adjacentes du bâti, à 90 ° l'un de l'autre, de telle sorte qu'ils sont séparés par trois réceptacles.

La construction de cet appareil n'est pas optimisée pour le traitement d'articles de taille petite par rapport au rayon de la machine, qu'il est alors préférable de disposer selon plusieurs cercles concentriques. De plus, le problème de l'accumulation des salissures dans les réceptacles, propre à ce type de machine fonctionnant en boucle, ne semble pas avoir retenu l'attention de son concepteur.

Il ressort des documents détaillés ci-dessus que de nombreux procédés et dispositifs de pesage d'articles en continu, faisant appel à différentes méthodes de tarage et de calibration mises en oeuvre par un ou plusieurs moyens de pesée, sont connus de l'état de la technique.

Mais il s'avère qu'il n'existe pas actuellement de système répondant parfaitement à certains besoins propres à la conchyliculture, notamment pour le calibrage des huîtres dans le respect des nouvelles normes, en vigueur depuis septembre 2000, qui exigent une précision accrue.

En particulier, le procédé et le dispositif de pesage proposés par la présente invention sont ceux du type dans lequel les articles sont placés dans des godets « dont la succession constitue une chaîne fermée » en étant guidés « le long d'une trajectoire fermée ».

La différence entre ce type de matériels et les installations linéaires ouvertes est fondamentale car, dans le cas des matériels du premier type, ce sont toujours les mêmes godets qui sont remplis par de nouveaux articles. Des salissures peuvent donc s'accumuler dans les godets, des corps étrangers tels que des algues risquent de tomber dans ceux-ci et fausser les mesures. Le problème ne se pose en revanche pas avec le remplissage d'emballages vides à chaque fois nouveaux dans un environnement propre, sur les installations linéaires ouvertes.

De plus, la machine conforme à la présente invention, mettant en oeuvre une chaîne fermée de godets, est nécessairement compacte, et des appareils de pesée automatique standards ne peuvent pas être utilisés comme ils le sont sur les chaînes linéaires connues de l'état de la technique.

### DESCRIPTION GÉNÉRALE DE L'INVENTION

La présente invention vise par conséquent à développer un procédé de pesage d'articles en continu offrant une précision élevée.

Elle a précisément pour objet un procédé de pesage d'articles en continu consistant à :
a) placer automatiquement ces articles individuellement dans des godets, ou analogues, en mouvement, dont la succession constitue une chaîne fermée ;
b) entraîner successivement les godets vers des premiers moyens de pesage automatique ;
c) déterminer à l'aide de ces premiers moyens de pesage les poids bruts représentant les poids des godets contenant les articles ;
d) déterminer au préalable les tares représentant les poids des godets vides ;
e) calculer les poids nets représentant les poids de ces articles en soustrayant les tares des poids bruts ;

La caractéristique essentielle du procédé selon l'invention est que les godets vides sont au préalable entraînés successivement vers des seconds moyens de pesage automatique à l'aide desquels les tares sont déterminées.

Une caractéristique additionnelle du procédé est que les tares sont déterminées immédiatement avant le remplissage des godets.

De préférence, la détermination à l'aide des premiers moyens de pesage du poids brut courant, correspondant au poids du godet rempli précédent immédiat du godet en cours de remplissage, dans le sens du mouvement de la chaîne, est réalisée simultanément à la détermination à l'aide des seconds moyens de pesage de la tare courante, correspondant au poids du godet vide suivant immédiat de ce même godet en cours de remplissage.

Avantageusement, le poids brut courant et la tare courante résultent de la moyenne de plusieurs mesures, de préférence quinze.

Ces mesures sont effectuées à grande cadence, de préférence à 50 mesures/seconde. Elles peuvent aussi être avantageusement transférées directement (DMA) dans la mémoire de données d'une unité centrale de traitement par une liaison série rapide, de préférence à 38.400 Bauds.

Un dispositif de pesage d'articles en continu, adapté à la mise en oeuvre du procédé selon l'invention, comprend de façon connue en soi :
- une succession de godets, ou analogues, en mouvement, destinés à recevoir les articles individuellement ;
- des moyens de guidage de ces godets le long d'une trajectoire fermée ;
- des moyens d'entraînement des godets ;
- des moyens de remplissage des godets dans une zone de remplissage ;
- des premiers moyens de pesage automatique des godets contenant les articles au cours de leur déplacement le long de leur trajectoire.

Ce dispositif est remarquable en ce qu'il comporte de plus des seconds moyens de pesage automatique des godets vides au cours de leur déplacement le long de leur trajectoire.

Une caractéristique additionnelle du dispositif de pesage d'articles en continu selon l'invention est que les seconds moyens de pesage précèdent immédiatement la zone de remplissage des godets le long de leur trajectoire, dans le sens du mouvement.

Une autre caractéristique de ce dispositif est que les premiers et seconds moyens de pesage comprennent respectivement un premier secteur et un second secteur des moyens de guidage reliés uniquement par un premier et un second capteurs d'effort au reste des moyens de guidage.

Avantageusement, les moyens de guidage comprennent au moins un rail horizontal supportant verticalement les godets et solidaire d'un châssis, de sorte que les premier et second capteurs sont solidaires respectivement d'une part d'un premier secteur et d'un second secteur de ce rail, et d'autre part du châssis.

On tire bénéfice de capteurs insensibles à la torsion et aux efforts latéraux. Ils sont de préférence du type de ceux à appui central comportant plusieurs jauges de contrainte adhérant à un parallélogramme déformable. Ils offrent notamment une précision meilleure que 0,02 N.

Les moyens de pesage du dispositif selon l'invention comprennent fort avantageusement :
- des moyens d'amplification des signaux analogiques issus des capteurs ;
- des moyens de conversion de ces signaux analogiques en des signaux numériques ;
- des moyens de mémorisation des signaux numériques dans une file d'attente, de préférence de type « FIFO » ;
- des moyens de transmission des signaux numériques, de préférence par une liaison de type « série » ;
- des moyens de traitement propres à chacun des capteurs, de préférence de type « microcontrôleur » ou analogue ;
- une unité centrale de type « microprocesseur » ou analogue ;
- des moyens de réception des signaux numériques et des moyens de transfert direct dans la mémoire de données, préférentiellement de type « SRAM », de l'unité centrale ;
- des moyens de programmation de cette unité centrale, comprenant de préférence une mémoire de programmes de type « FLASH », aux fins de déterminer en continu le poids des articles en fonction des signaux numériques.

Le procédé selon l'invention est avantageusement mis en oeuvre dans une installation pour le calibrage de coquillages, notamment d'huîtres, qui comporte le dispositif de pesage en continu précédemment décrit. Cette installation est remarquable en ce qu'elle comprend, d'une part :
- un plateau tournant horizontal présentant au moins une série d'alvéoles répartis sur un cercle, de préférence deux séries de dix-huit alvéoles répartis sur deux cercles concentriques ;
- au moins une série de godets, ou analogues, placés à l'intérieur des alvéoles en étant articulés par leurs bords antérieurs sur les bords antérieurs en vis à vis de ces alvéoles, et normalement bloqués en position horizontale par des moyens de blocage ;
- des moyens de remplissage des godets avec les coquillages, et notamment les huîtres ;
- au moins deux secteurs de rails circulaires et concentriques, de part et d'autre des alvéoles, supportant les godets libérés verticalement et les maintenant en position horizontale, ces secteurs étant portés par des capteurs d'effort solidaires du châssis de l'installation ;
- des moyens de traitement des signaux émis par les capteurs;
- des moyens de calcul des poids des coquillages, et notamment des huîtres ;
   constituant le dispositif de pesage en soi et, d'autre part :
   - au moins une série de moyens de renversement des godets répartis autour du plateau, de préférence deux séries de six, chacun correspondant à une trémie d'évacuation des coquillages, et notamment des huîtres, ayant un calibre déterminé parmi, de préférence, six calibres ;
   - des moyens de commande des moyens de renversement en fonction des poids ;
   - des moyens de commande de l'installation ;
   - des moyens d'affichage de l'état de fonctionnement de l'installation ;

Une caractéristique additionnelle de l'installation selon l'invention est qu'elle comporte au moins une rampe pour le redressement des godets après renversement.

De manière avantageuse, l'installation comporte des moyens de saisie de données, de préférence de type "clavier", notamment des fourchettes de poids correspondant aux calibres normalisés des huîtres, de préférence plus de 150 g, de 111 g à 150 g, de 86 g à 110 g, de 66 g à 85 g, de 46 g à 65 g, de 30 g à 45 g respectivement pour les calibres n° 0, 1, 2, 3, 4, ou 5.

De préférence, la tolérance sur ces fourchettes est inférieure à 2 grammes.

Pour des raisons de sécurité, l'installation comporte des moyens d'alarme, et des moyens d'arrêt instantané en cas de détermination d'un poids en dehors des fourchettes ci-dessus.

On tire bénéfice d'une installation pour le calibrage de coquillages, notamment d'huîtres, selon l'invention comportant des moyens d'impression des états statistiques relatifs préférentiellement aux cumuls par calibres, aux tonnages journaliers, mensuels et annuels.

L'installation comporte également des premiers moyens de communication associés à des moyens de maintenance à distance, et des seconds moyens de communication associés à des moyens d'analyse et d'archivage de données extérieurs, préférentiellement de type « ordinateur personnel ».

Ces quelques spécifications essentielles rendent évidents pour l'homme de métier les avantages apportés à une installation de calibrage de coquillages, et notamment d'huîtres, par le procédé et le dispositif de pesage d'articles en continu selon l'invention par rapport à l'état de la technique antérieur.

On comprendra bien l'invention à la lecture du complément de description suivant, en liaison avec les dessins ci-annexés.

### BRÈVE DESCRIPTION DES DESSINS

La Figure 1 est une vue de dessus du dispositif de pesage d'articles en continu selon l'invention.
La Figure 2 présente schématiquement le procédé de pesage d'articles en continu selon l'invention.
La Figure 3 est une vue de dessus partielle des moyens de guidage du dispositif.
La Figure 4 est une coupe partielle du dispositif selon un cylindre médian de l'un des moyens de guidage, montrant notamment les seconds moyens de pesage.
La Figure 5 est une coupe partielle radiale du dispositif montrant notamment les seconds moyens de pesage.
La Figure 6 est une représentation schématique de l'électronique du dispositif de pesage d'articles en continu selon l'invention, et d'une partie de l'installation de calibrage d'huîtres dans laquelle il est intégré.
La Figure 7 est une coupe radiale de l'installation montrant notamment les seconds moyens de pesage.
La Figure 8 est une coupe radiale de l'installation montrant notamment deux trémies d'évacuation des huîtres.

### DESCRIPTION DES FORMES PRÉFÉRÉES DE L'INVENTION

Les formes préférées de l'invention concernent une machine à trier automatiquement les huîtres, d'une capacité de 19.160 opérations par heure, avec comme objectif de les sélectionner dans le respect des nouvelles normes en vigueur.

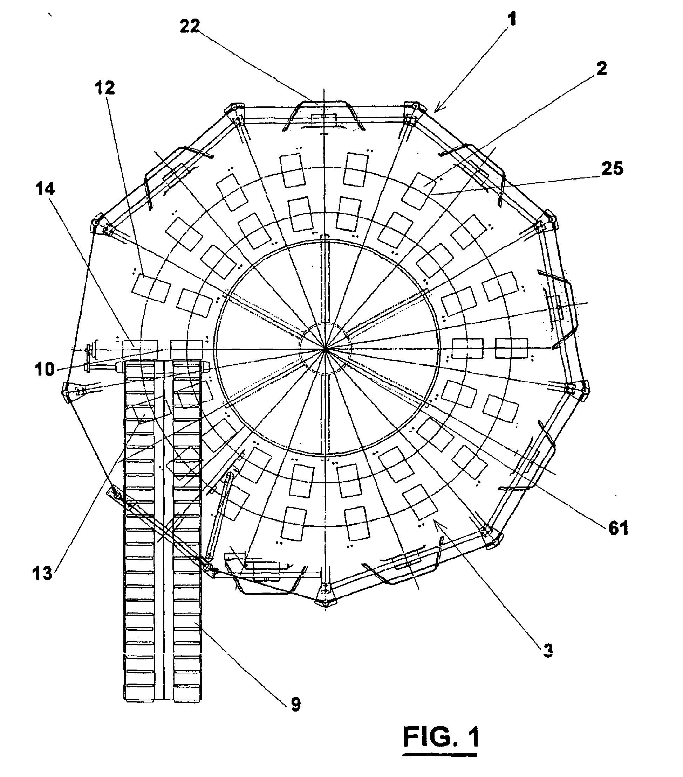

Comme le montre la Figure 1, il s'agit d'une machine rotative comportant un plateau tournant 1 présentant deux séries de dix-huit alvéoles 2 de 160 mm X 110 mm répartis sur deux couronnes concentriques.

Chaque alvéole 2 est muni d'un godet 3 en matière plastique. Ledit godet a pour fonction de recevoir l'huître qui se place au fond de la forme en V de celui-ci lors du chargement, et de la maintenir jusqu'au point de déversement.

L'ensemble 1,2,3 tourne à la vitesse de 8,87 T/ min dans le sens des aiguilles d'une montre, en étant entraîné par un moto-réducteur 4.

Toutes les parties de la machine en contact avec les huîtres sont réalisées en matériaux aptes au contact avec les produits alimentaires.

La machine est équipée de quatre tables de pesage 5, 6, 7, 8, deux par séries d'alvéoles 2. Les huîtres sont chargées par un convoyeur 9, dont l'extrémité 10 est prise comme axe de référence 10 pour le repérage des godets 3 sur le carrousel 1.

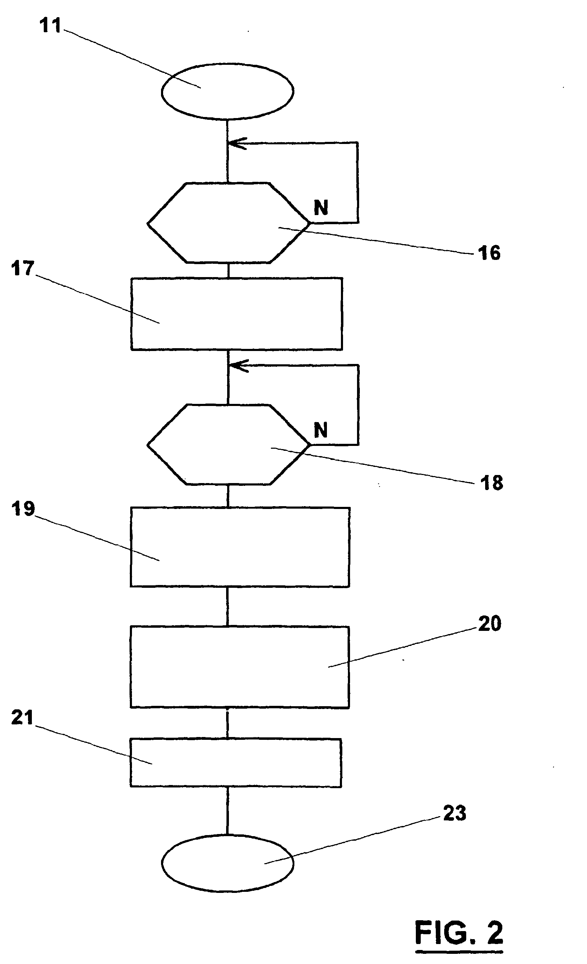

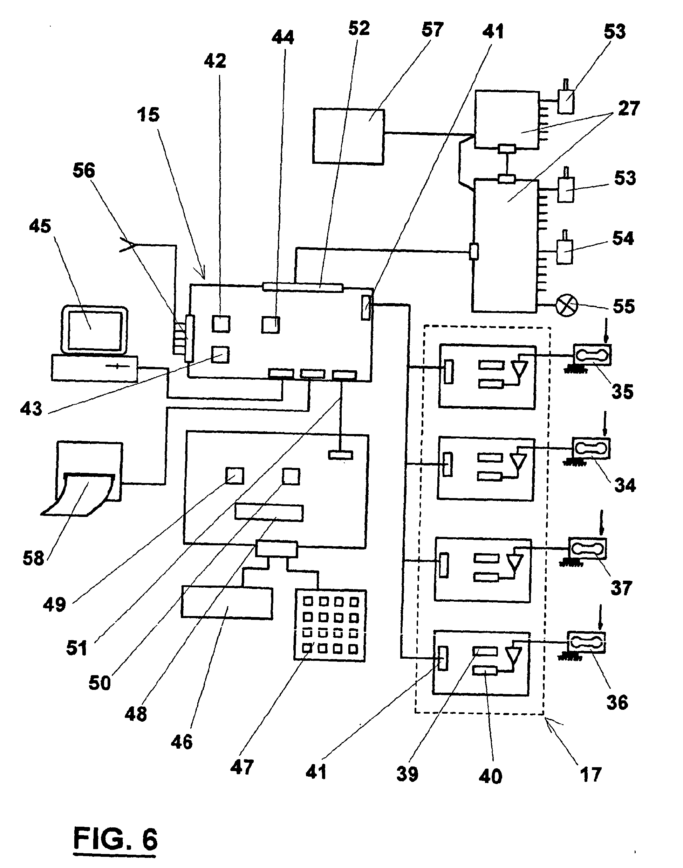

La machine étant en rotation, un godet 3 vide, par exemple de la série extérieure des alvéoles 2, est entraîné sous l'extrémité 10 du convoyeur de chargement 9. L'opération de pesage 11 (voir Figure 2) du godet rempli 12 est effectuée sur la première table 5,7 dès que le passage du godet 12 devant un capteur est détecté. Simultanément est réalisée sur la seconde table de pesage 6,8 la pesée du godet vide 13 précédant le godet en cours de remplissage 14. Pour ce faire, l'unité centrale 15 d'un ensemble électronique, qui sera décrit de manière détaillée en liaison avec la Figure 6, teste 16 en boucle la présence des godets sur les tables de pesage 5,6,7,8. Quand les godets 13,14 sont détectés, cette unité centrale 15 transmet une demande de détermination de poids à l'électronique d'acquisition des données 17, et en attend 18 la validation avant de les lire 19. Le poids du godet vide 13 est mis en mémoire pour constituer la tare qui servira au calcul du poids net de l'huître qui remplira ce godet 13 ultérieurement. Le poids net de l'huître contenue dans le godet plein 12 est calculée 20 en soustrayant la tare précédemment mémorisée du poids brut qui vient d'être déterminé 19. Le poids net courant est mis en mémoire 21 pour le pilotage ultérieur des organes de renversement des godets 3 au-dessus des trémies 22 correspondant à chaque calibre. Le cycle de pesage s'achève 23 pour ce couple de godet plein 12/godet vide 13, et peut recommencer 11 pour le couple suivant.

Cette manière de procéder permet de s'affranchir des variations éventuelles du poids à vide des godets 3 liées aux dispersions de fabrication et aux salissures, poussières, sable, algues ou autres.

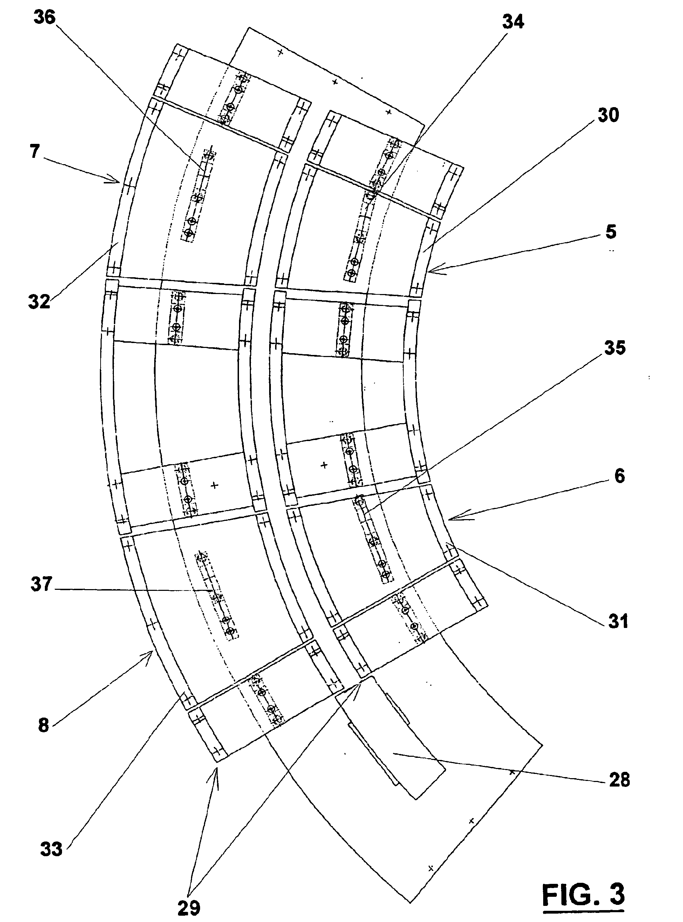

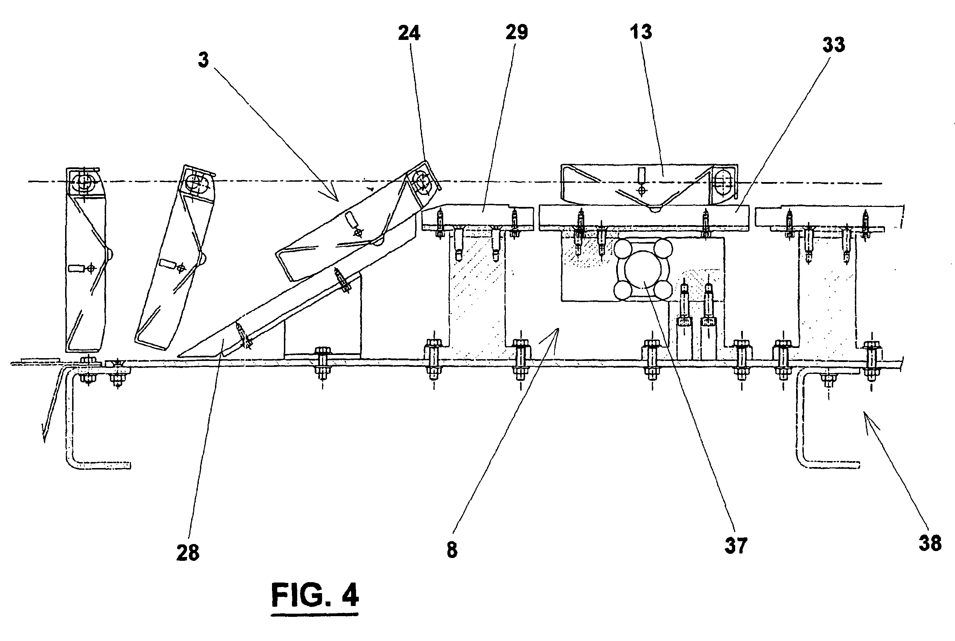

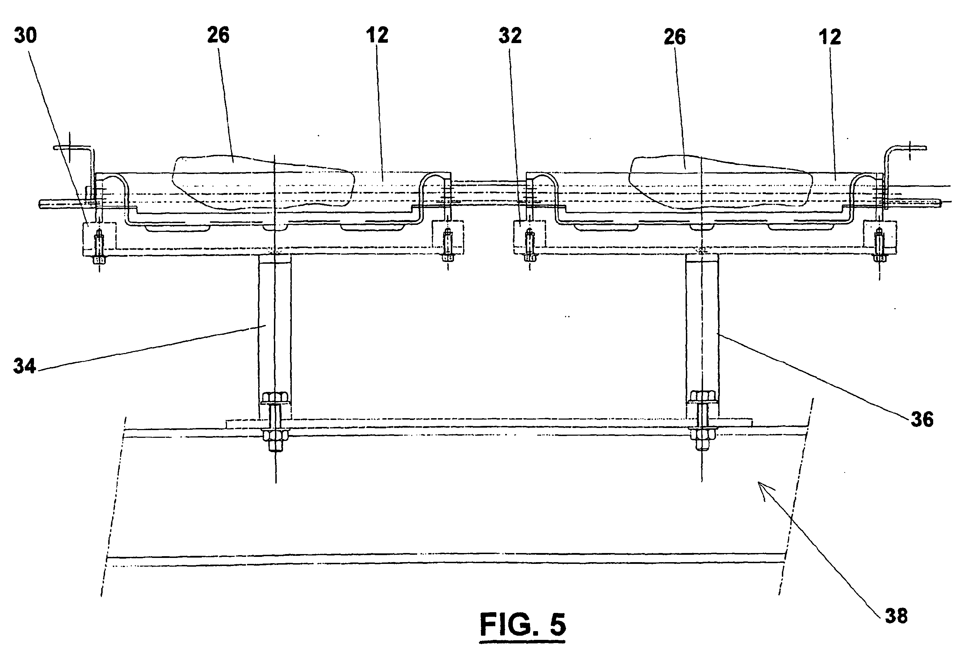

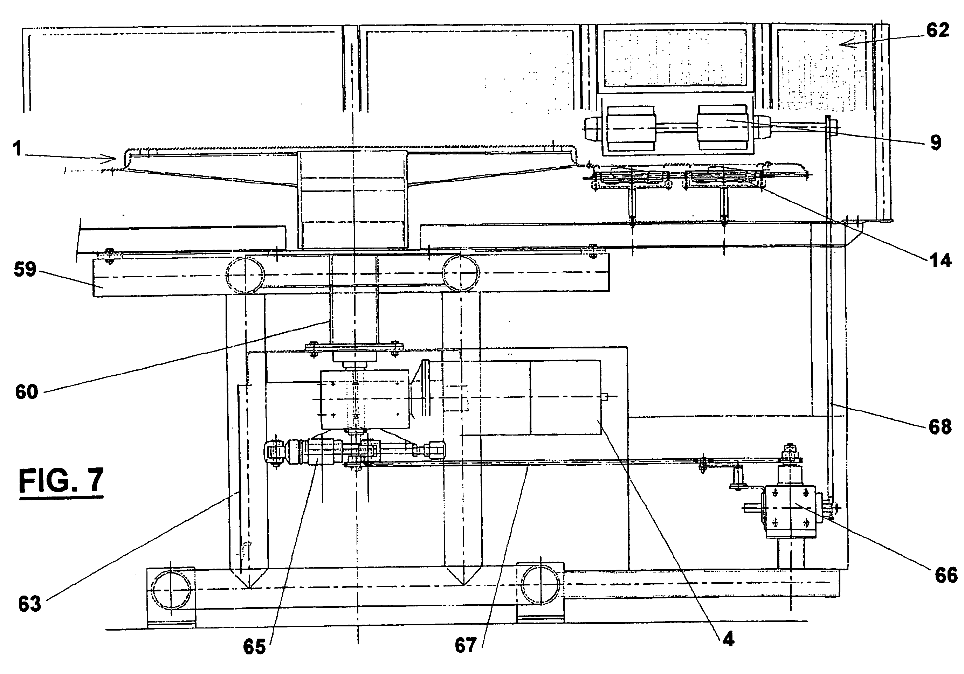

La structure précise des tables de pesage 5, 6, 7, 8 apparaît bien sur les Figures 3, 4 et 5. Leur emplacement dans l'installation est indiqué sur la Figure 7.

Les godets 3 sont articulés par leurs bords antérieurs 24 autour des bords extérieurs 25 en vis-à-vis des alvéoles 2. Ils sont normalement bloqués en position horizontale jusqu'à la trémie 22 correspondant au calibre des huîtres 26 qu'ils contiennent. Le renversement d'un godet 3 est fait sous l'action d'un électro-aimant 53 commandé par l'unité centrale 15 via un module électronique de puissance 27.

Les godets 3 vides, en position verticale et libres en rotation autour de leurs charnières 24, accèdent aux secondes tables de pesage 6,8 au moyen d'une rampe 28. La rampe 28 est commune aux deux séries de godets 3 et a pour effet de ramener ceux-ci en position horizontale. Les godets sont ensuite maintenus dans cette position par deux rails 29 situés de part et d'autre des alvéoles 2, jusqu'aux tables de pesage 5, 6, 7, 8. Un premier secteur 30,32 et un second secteur 31,33 de ces rails 29 constituent respectivement les parties supérieures des première et seconde tables de pesage intérieures 5,6 et extérieures 7, 8. Chaque secteur 30, 31, 32, 33 supporte intégralement le poids d'un godet, le degré de translation verticale d'un godet étant libéré grâce la section ovale de l'alésage constituant l'articulation 24. Un capteur d'effort 34,35,36,37 solidaire du châssis 38 de la machine porte chaque secteur 30, 31, 32, 33 : de ce fait, on dispose d'un moyen pour déterminer le poids de l'ensemble secteur 30, 32 et godet vide 13 ou rempli 12 par l'huître 26.

A cause du mouvement de rotation, les capteurs 34, 35, 36, 37 subissent des forces dynamiques latérales. Pour cette raison, ce seront des capteurs spéciaux, insensibles à la torsion et aux efforts latéraux. Par ailleurs, un modèle en acier inoxydable devra être choisi, présentant un degré d'étanchéité IP68 selon la norme DIN40.050, pour mieux résister au milieu humide.

Un capteur de type « HPS », à appui central, commercialisé par la société Revere Transducers, répond notamment à ces spécifications. Il comporte un parallélogramme dont la déformation est mesurée par des jauges de contrainte. Sa capacité est de 6 kg pour une classe de précision C1 selon la recommandation OIML R-60.

Pour atténuer l'effet des vibrations mécaniques dues à l'entraînement du carrousel 1 et transmises aux capteurs 34, 35, 36, 37, ainsi que celui des résonances à la fréquence propre des ensembles godet + capteur ou godet + huître + capteur excitées par le choc d'arrivée d'un godet 12,13 sur un capteur 34, 35, 36, 37, plusieurs mesures sont effectuées à grande cadence et traitées par l'électronique d'acquisition des données 17.

Comme le montre le schéma-bloc de la Figure 6, le système d'acquisition 17 comprend quatre conditionneurs de jauges de contrainte indépendants pilotés chacun par un microcontrôleur 39.

Les signaux analogiques issus des jauges sont amplifiés, puis échantillonnés par des convertisseurs analogiques/numériques 40. La cadence de conversion est réglable de dix à deux cents échantillons par seconde. Des essais avec un prototype de l'installation ont montré que la cadence optimale était de cinquante mesures par seconde.

Ces mesures sont stockées en mémoire dans une file d'attente de type « FIFO » (« First In, First Out », c'est-à-dire « premier entré, premier sorti ») gérée par le microcontrôleur 39. Les mesures sont filtrées par une technique de moyenne mobile portant sur un nombre paramétrable d'échantillons consécutifs. Le choix d'un filtrage sur quinze valeurs a donné les meilleurs résultats pour une cadence de tri de 19.160 huîtres à l'heure.

Les mesures filtrées émanant de l'électronique d'acquisition 17 sont transmises à l'unité centrale 15 par des liaisons de type « série » à 38.400 Bauds au moyen de circuits d'interface 41 série/ parallèle de type « UART »(« Universal Asynchronous Receiver / Transmitter » « Emetteur-récepteur universel asynchrone »).

L'unité centrale 15 comprend un microprocesseur 42 et est équipée d'une mémoire de programme 43 importante de technologie « FLASH ».

Les données transmises par les conditionneurs de jauges 17 sont stockées directement dans une mémoire statique 44 à accès aléatoire (SRAM ou « Static Random Access Memory ») sans transiter par le microprocesseur 42 (canal série « DMA » ou « Direct Memory Access »). Le contenu de la SRAM 44 est sauvegardé grâce à une pile au lithium. Un système de sauvegarde permet également de sauver les données de la mémoire « FLASH » 43 et de les restituer.

Le programme est téléchargé depuis l'extérieur afin de faciliter les mises à jour et la maintenance à partir d'un ordinateur 45 de type « ordinateur personnel ».

L'interface homme/ machine est constituée d'un afficheur 46 graphique et d'un clavier 47 gérés également par un microprocesseur 48 associé à une mémoire « FLASH » 49 et une mémoire de données SRAM 50. La liaison avec l'unité centrale 15 est assurée également par un canal série DMA 51.

La couche applicative de l'unité centrale 15 gère l'automatisme, les calculs statistiques (totalisations, moyennes..), les commandes de déversement, la détection du remplissage des pochons destinés à recevoir les huîtres qui sont disposés sous les trémies 22. Après chaque pesée, le nombre cumulé d'huîtres et le poids par pochon sont calculés et comparés aux consignes. Si une ou plusieurs consignes sont atteintes, une commande d'arrêt du remplissage est envoyée sur le pochon concerné, tandis que l'opérateur est alerté. La couche applicative gère aussi le guide opérateur, l'arborescence des menus etc... Les entrées sont gérées par interruptions déclenchées sur les fronts montants des signaux.

Matériellement, le système électronique décrit ci-dessus est contenu dans un boîtier encastrable dans un tableau électrique. Le boîtier comporte à l'arrière un connecteur 52 surmoulé à trente-sept points (SUB-D37) vers l'unité de puissance 27 commandant les électro-aimants 53,54 de renversement des godets 3 et respectivement de blocage des clapets des trémies 22, et le gyrophare 55 d'alerte, ainsi que les liaisons vers les capteurs 5, 6, 7, 8 et les entrées de télécommandes 56. L'interface homme/ machine 46, 47 apparaît à l'avant du boîtier. L'unité de puissance 27 se présente sous la forme d'un module à fixation sur rail DIN, et est alimentée par une alimentation 24V spécifique 57. Les électro-aimants 53,54 sont connectés à l'unité de puissance 27 par un bornier à vis.

L'impression des résultats est effectuée en connectant une imprimante 58 à un port série. Des emplacements pour options permettront d'implémenter des fonctionnalités supplémentaires à l'avenir.

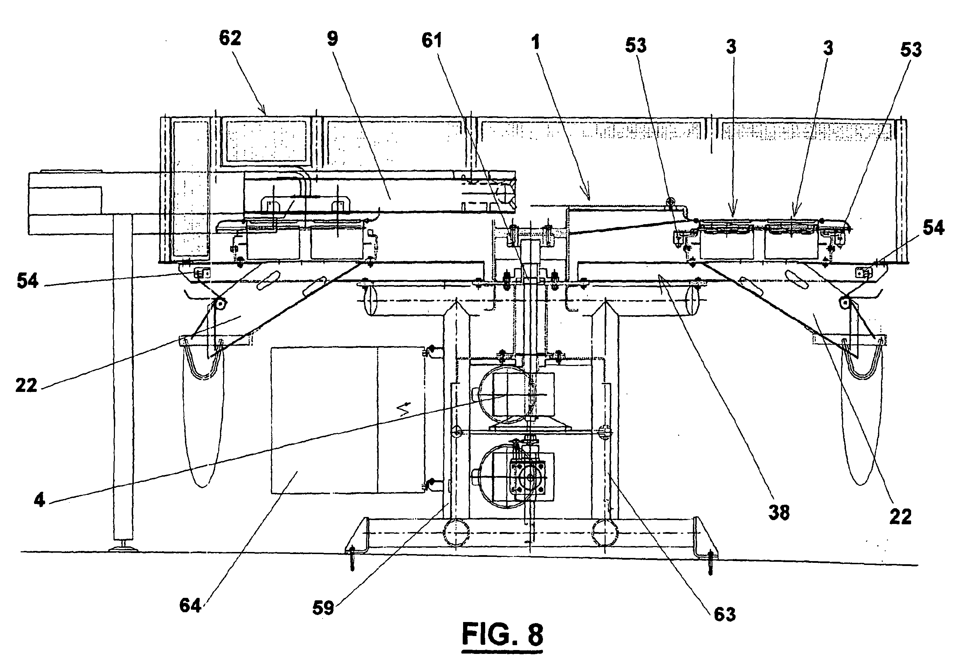

Au plan mécanique, les Figures 7 et 8 montrent bien la conception de l'ensemble de la machine.

Le châssis 38 fixe de la machine est construit à partir d'éléments tubulaires 59 du commerce en acier inoxydable Z2CN18.10. Ce châssis sert de support en partie centrale au fourreau 60 de guidage et de maintien de l'arbre d'entraînement 61 du plateau tournant 1.

En partie supérieure, le châssis 38 reçoit les douze électro-aimants 53 actionnant les gâches déclenchant le basculement des godets 3, ainsi que les six électro-aimants 54 commandant les clapets des trémies 22.

Un ensemble de carters 62 de protection assure la sécurité physique autour de la machine, ainsi que la protection des différents éléments situés en partie basse contre les projections d'eau et les ruissellements.

Les carters 62 sont équipés de dispositifs de mise à l'arrêt de la machine lors de toute ouverture.

En partie basse, plusieurs coffrets étanches 63 sont aménagés pour le regroupement du matériel électrique et des dispositifs de commande. Il s'agit notamment du groupe moto-réducteur 4 et de l'armoire d'alimentation électrique 64. Le moteur est alimenté en courant triphasé 400V / 50 Hz par le réseau. Sa puissance est de 1,8 KW. Un frein électrique automatique 65, dont la bobine de commande est également alimentée par le secteur, permet de stopper la machine dans un temps inférieur à 12 ms en cas de danger. Par mesure de sécurité tous les autres éléments sont alimentés sous une tension de 24V.

Afin d'assurer la synchronisation de l'arrivée des huîtres avec le passage des godets 3, la rotation des tapis d'amenée 9 est directement liée à la rotation de l'arbre moteur 61 par un dispositif de renvoi d'angle 66 et de chaînes de transmission 67,68.

La conformité de la machine aux normes de sécurité en vigueur et à la réglementation du travail a été particulièrement étudiée. Outre un dispositif d'arrêt d'urgence de type « coup de poing », un système de sécurité vise à détecter toute atteinte grave à l'intégrité corporelle de l'opérateur qui pourrait résulter du fonctionnement de la machine. Les godets 3 sont systématiquement vidés par un moyen mécanique dans une septième trémie, et une cellule photo-électrique vérifie alors qu'aucun obstacle n'entrave le relèvement des godets 3 vides. Dans le cas contraire, le déclenchement du frein électrique 65 est immédiat.

La programmation de la machine permet aussi un respect scrupuleux des dispositions retenues par les organismes professionnels de la conchyliculture en matière de calibrage des huîtres. Les dispositions visées concernent plus particulièrement les calibres, les critères de classification, les poids indicatifs et les poids de référence des colis types, et le contrôle des calibres.

L'installation selon l'invention permet d'atteindre une tolérance meilleure que 2 grammes, au lieu des 5 grammes stipulées par ces dispositions, sur les fourchettes de poids correspondant aux calibres normalisés.

L'augmentation de la précision du calibrage confère à l'utilisateur de l'installation un avantage économique important, car jusqu'ici le producteur d'huîtres était contraint de compléter au jugé les colis afin d'être sûr d'atteindre le poids minimal de référence. Mais le dépassement pouvait atteindre 10% du poids, et donc représenter un manque à gagner considérable sur une production moyenne de 500 T par exemple, puisque cette marchandise supplémentaire n'était pas vendue.

Comme il va de soi, l'invention ne se limite pas aux seuls modes d'exécution préférentiels décrits ci-dessus à titre d'exemple. Elle embrasse au contraire toutes les variantes possibles de réalisation en accord avec les revendications attachées.

Le procédé et de dispositif de pesage d'articles en continu décrits ci-dessus peuvent notamment être mis en oeuvre dans une calibreuse d'huîtres du type « en ligne » existante pour en améliorer la précision. Cette variante de l'installation ne sortirait pas non plus du cadre de la présente invention.

## Revendications

1. Procédé de pesage d'articles en continu consistant à :
a) placer automatiquement lesdits articles (26) individuellement dans des godets (3), ou analogues, en mouvement, dont la succession constitue une chaîne fermée ;
b) entraîner successivement lesdits godets (3) vers des premiers moyens de pesage automatique (5,7) ;
c) déterminer à l'aide desdits premiers moyens de pesage (5,7) les poids bruts représentant les poids desdits godets (3) contenant lesdits articles (26) ;
d) entraîner au préalable successivement lesdits godets vides (13) vers des seconds moyens de pesage automatique (6, 8) ;
e) déterminer au préalable les tares représentant les poids desdits godets (3) vides à l'aide desdits seconds moyens de pesage automatique (6, 8) ;
f) calculer les poids nets représentant les poids desdits articles (26) en soustrayant lesdites tares desdits poids bruts ;
**caractérisé en ce que** les tares sont déterminées immédiatement avant le remplissage des godets (3).

2. Procédé de pesage d'articles en continu selon la revendication 1, **caractérisé en ce que** la détermination à l'aide des premiers moyens de pesage (5,7) du poids brut courant, correspondant au poids du godet rempli (12) précédent immédiat du godet en cours de remplissage (14), dans le sens du mouvement de ladite chaîne, est réalisée simultanément à la détermination à l'aide des seconds moyens de pesage (6, 8) de la tare courante, correspondant au poids du godet vide (13) suivant immédiat dudit godet en cours de remplissage (14).

3. Procédé de pesage d'articles en continu selon la revendication 2, **caractérisé en ce que** ledit poids brut courant et ladite tare courante résultent de la moyenne de plusieurs mesures, de préférence quinze.

4. Procédé de pesage d'articles en continu selon la revendication 3, **caractérisé en ce que** lesdites mesures sont effectuées à grande cadence, de préférence à 50 mesures/seconde.

5. Procédé de pesage d'articles en continu selon la revendication 3, **caractérisé en ce que** lesdites mesures sont transférées directement (DMA) dans la mémoire de données (44) d'une unité centrale (15) de traitement par une liaison série (41) rapide, de préférence à 38.400 Bauds.

6. Dispositif de pesage d'articles en continu, adapté à la mise en oeuvre du procédé selon l'une quelconque des revendications 1 à 5, comprenant:
- une succession de godets (3), ou analogues, en mouvement, destinés à recevoir lesdits articles (26) individuellement;
- des moyens de guidage (2, 28, 29) desdits godets (3) le long d'une trajectoire fermée;
- des moyens d'entraînement (1) desdits godets (3);
- des moyens de remplissage desdits godets (3) dans une zone de remplissage (10);
- des premiers moyens de pesage automatique (5, 7) desdits godets (3) contenant lesdits articles (26) au cours de leur déplacement le long de ladite trajectoire;
- des seconds moyens de pesage automatique (6, 8) des godets (3) vides au cours de leur déplacement le long de ladite trajectoire :
**caractérisé en ce que** lesdits seconds moyens de pesage (6, 8) précèdent immédiatement ladite zone de remplissage (10) des godets (3) le long de ladite trajectoire, dans le sens dudit mouvement.

7. Dispositif de pesage d'articles en continu selon la revendication 6, **caractérisé en ce que** lesdits premiers et seconds moyens de pesage (5, 6, 7, 8) comprennent respectivement un premier secteur (30, 32) et un second secteur (31,33) desdits moyens de guidage (2, 28, 29) reliés uniquement par un premier et un second capteur (34, 36, 35, 37) d'effort au reste desdits moyens de guidage (2, 28, 29).

8. Dispositif de pesage d'articles en continu selon la revendication 7, **caractérisé en ce que** lesdits moyens de guidage (2, 28, 29) comprennent au moins un rail horizontal (29) supportant verticalement lesdits godets (3) et solidaire d'un châssis (38), et **en ce que** lesdits premier et second capteurs (34, 36, 35, 37) sont solidaires respectivement d'une part dudit premier secteur (30, 32) et dudit second secteur (31, 33) de ce rail, et d'autre part dudit châssis (38).

9. Dispositif de pesage d'articles en continu selon la revendication 8, **caractérisé en ce que** lesdits capteurs (34, 36, 35, 37) sont insensibles à la torsion et aux efforts latéraux, de préférence du type de ceux à appui central comportant plusieurs jauges de contrainte adhérant à un parallélogramme déformable, offrant notamment une précision meilleure que 0,02 N.

10. Dispositif de pesage d'articles en continu selon la revendication 9, **caractérisé en ce que** lesdits moyens de pesage (5, 6, 7, 8) comprennent :
- des moyens d'amplification des signaux analogiques issus desdits capteurs (34, 36, 35, 37) ;
- des moyens de conversion (40) desdits signaux analogiques en des signaux numériques ;
- des moyens de mémorisation (39) desdits signaux numériques dans une file d'attente, de préférence de type « FIFO » ;
- des moyens de transmission (41) desdits signaux numériques, de préférence par une liaison de type « série » ;
- des moyens de traitement (39) propres à chacun desdits capteurs (34, 36, 35, 37), de préférence de type « microcontrôleur » ou analogue ;
- une unité centrale (42) de type « microprocesseur » ou analogue ;
- des moyens de réception (41) desdits signaux numériques et des moyens de transfert direct dans la mémoire de données (44), préférentiellement de type « SRAM », de ladite unité centrale (42) ;
- des moyens de programmation de ladite unité centrale (42), comprenant de préférence une mémoire de programmes(43) de type « FLASH », aux fins de déterminer en continu le poids desdits articles (26) en fonction desdits signaux numériques.

11. Installation pour le calibrage de coquillages, notamment d'huîtres, mettant en oeuvre le procédé selon l'une quelconque des revendications 1 à 5, et comportant le dispositif de pesage en continu selon l'une quelconque des revendications 6 à 10, **caractérisée en qu'**elle comprend :
a) d'une part :
- un plateau (1) tournant horizontal présentant au moins une série d'alvéoles (2) répartis sur un cercle, de préférence deux séries de 18 alvéoles (2) répartis sur deux cercles concentriques ;
- au moins une série de godets (3), ou analogues, placés à l'intérieur desdits alvéoles (2) en étant articulés par leurs bords antérieurs (24) sur les bords antérieurs (25) en vis-à-vis desdits alvéoles (2), et normalement bloqués en position horizontale par des moyens de blocage ;
- des moyens de remplissage (9) desdits godets (3) avec lesdits coquillages, et notamment lesdites huîtres (26) ;
- au moins deux secteurs (30, 31, 32, 33) de rails (29) circulaires et concentriques, de part et d'autre desdits alvéoles (2), supportant lesdits godets (3) libérés verticalement et les maintenant en position horizontale, lesdits secteurs (30,31,32,33) étant portés par des capteurs (34,36,35,37) d'effort solidaires du châssis (38) de ladite installation ;
- des moyens de traitement (17) des signaux émis par lesdits capteurs ;
- des moyens de calcul (15) des poids desdits coquillages, et notamment desdites huîtres (26) ;
constituant ledit dispositif de pesage en soi, et
b) d'autre part :
- au moins une série de moyens de renversement (53) desdits godets (3) répartis autour dudit plateau (1), de préférence deux séries de six, chacun correspondant à une trémie (22) d'évacuation desdits coquillages, et notamment des huîtres (26), ayant un calibre déterminé parmi, de préférence, six calibres ;
- des moyens de commande (27) desdits moyens de renversement (53) en fonction desdits poids ;
- des moyens de commande (47,56) de ladite installation ;
- des moyens d'affichage (46) de l'état de fonctionnement de ladite installation ;

12. Installation pour le calibrage de coquillages, notamment d'huîtres, selon la revendication 11, **caractérisée en ce qu'**elle comporte au moins une rampe (28) pour le redressement desdits godets (3) après renversement.

13. Installation pour le calibrage de coquillages, notamment d'huîtres, selon l'une quelconque des revendications 11 ou 12 précédentes, **caractérisée en ce qu'**elle comporte des moyens de saisie de données (47), de préférence de type « clavier », notamment des fourchettes de poids correspondant à une pluralité dudit calibre, de préférence plus de 150 g, de 111 g à 150 g, de 86 g à 110 g, de 66 g à 85 g, de 46 g à 65 g, de 30 g à 45 g respectivement pour les calibres n° 0, 1, 2, 3, 4, ou 5 des huîtres (26).

14. Installation pour le calibrage de coquillages, notamment d'huîtres, selon la revendication 13, **caractérisée en ce que** la tolérance sur lesdites fourchettes est inférieure à 2 grammes.

15. Installation pour le calibrage de coquillages, notamment d'huîtres, selon l'une quelconque des revendications 13 ou 14 précédentes, **caractérisée en ce qu'**elle comporte des moyens d'alarme (55), et des moyens d'arrêt instantané (65) en cas de détermination d'un poids en dehors desdites fourchettes.

16. Installation pour le calibrage de coquillages, notamment d'huîtres, selon l'une quelconque des revendications 11 à 15 précédentes, **caractérisée en ce qu'**elle comporte des moyens d'impression (58) des états statistiques relatifs préférentiellement aux cumuls par calibres, aux tonnages journaliers, mensuels et annuels.

17. Installation pour le calibrage de coquillages, notamment d'huîtres, selon l'une quelconque des revendications 11 à 16 précédentes, **caractérisée en ce qu'**elle comporte des premiers moyens de communication (56) associés à des moyens de maintenance à distance, et des seconds moyens de communication associés à des moyens d'analyse et d'archivage de données extérieurs (45), préférentiellement de type « ordinateur personnel ».

## Claims

1. Method for continuously weighing items, comprising:
a) automatically placing said items (26) individually in moving buckets (3) or the like, the series of which constitutes a closed conveyor;
b) successively driving said buckets (3) towards first automatic weighing means (5, 7);
c) determining, with the aid of said first weighing means (5, 7), the gross weights representing the weights of said buckets (3) containing said items (26);
d) previously, successively driving said empty buckets (13) towards second automatic weighing means (6, 8);
e) previously, determining the tares representing the weights of said empty buckets (3) by means of said second automatic weighing means (6, 8);
f) calculating the net weights representing the weights of said items (26) by subtracting said tares from said gross weights;
**characterised in that** the tares are determined immediately before filling the buckets (3).

2. Process for continuously weighing items according to claim 1, **characterised in that** the determination of the current gross weight, using the first weighing means (5, 7), said gross weight corresponding to the weight of the full bucket (12) immediately preceding the bucket being filled (14), in the direction of travel of said conveyor, is carried out at the same time as the current tare is determined, using the second weighing means (6, 8), said tare corresponding to the weight of the empty bucket (13) immediately following said bucket being filled (14).

3. Method of continuously weighing items according to claim 2, **characterised in that** said current gross weight and said current tare are obtained from the average of a plurality of measurements, preferably fifteen.

4. Method of continuously weighing items according to claim 3, **characterised in that** said measurements are carried out at a fast rate, preferably 50 measurements per second.

5. Method for continuously weighing items according to claim 3, **characterised in that** said measurements are transferred directly (DMA) into the data memory (44) of a central processor unit (15) by a high speed serial link (41), preferably at 38,400 Bauds.

6. Apparatus for continuously weighing items, suitable for carrying out the method according to any one of claims 1 to 5, comprising:
- a series of moving buckets (3) or the like adapted to receive said items (26) individually;
- means (2, 28, 29) for guiding said buckets (3) along a closed trajectory;
- means (1) for driving said buckets (3);
- means for filling said buckets (3) in a filling zone (10);
- first automatic weighing means (5, 7) for said buckets (3) containing said items (26) as they travel along said trajectory;
- second automatic weighting means (6, 8) for the empty buckets (3) during their travel along said trajectory:
**characterised in that** said second weighing means (6, 8) immediately precede said filling zone (10) for the buckets (3) along said trajectory, in the direction of said travel.

7. Apparatus for continuously weighing items according to claim 6, **characterised in that** said first and second weighing means (5, 6, 7, 8) comprise a first sector (30, 32) and a second sector (31, 33), respectively, of said guide means (2, 28, 29) connected to the remainder of said guide means (2, 28, 29) solely by a first and a second force sensor (34, 36, 35, 37).

8. Apparatus for continuously weighing items according to claim 7, **characterised in that** said guide means (2, 28, 29) comprise at least one horizontal rail (29) vertically supporting said buckets (3) and integral with a frame (38), and **in that** said first and second sensors (34, 36, 35, 37) are integrally connected with said first sector (30, 32) and said second sector (31, 33), respectively, of this rail, on the one hand, and with said frame (38), on the other hand.

9. Apparatus for continuously weighing items according to claim 8, **characterised in that** said sensors (34, 36, 35, 37) are tolerant of torsion and lateral forces, and are preferably of the type with a central support comprising a plurality of strain gauges adhering to a deformable parallelogram which provides in particular a precision greater than 0.02 N.

10. Apparatus for continuously weighing items according to claim 9, **characterised in that** said weighing means (5, 6, 7, 8) comprise:
- means for amplifying the analogue signals emitted from said sensors (34, 36, 35, 37);
- means (40) for converting said analogue signals into digital signals;
- means (39) for storing said digital signals in a queue, preferably of the "FIFO" type;
- means (41) for transmitting said digital signals, preferably by a "serial" type connection;
- processing means (39) for each of said sensors (34, 36, 35, 37), preferably of the "microcontroller" type or the like;
- a central unit (42) of the "microprocessor" type or the like;
- means (41) for receiving said digital signals and means for direct transfer into the preferably "SRAM" -type data memory (44) of said central unit (42);
- means for programming said central unit (42), preferably comprising a "FLASH" type program memory (43), for the purpose of continuously determining the weight of said items (26) as a function of said digital signals.

11. Installation for sizing shellfish, notably oysters, using the process according to any one of claims 1 to 5, and including the continuous weighing apparatus according to any one of claims 6 to 10, **characterised in that** it comprises:
a) on the one hand:
- a horizontal rotating plate (1) having at least one series of openings (2) arranged in a circle, preferably two series of 18 openings (2) arranged in two concentric circles;
- at least one series of buckets (3) or the like placed inside said openings (2), being jointed at their front edges (24) to the opposing front edges (25) of said openings (2) and normally blocked in the horizontal position by blocking means;
- means (9) for filling said buckets (3) with said shellfish and particularly said oysters (26);
- at least two sectors (30, 31, 32, 33) of circular concentric rails (29), on either side of said openings (2), supporting said buckets (3) which have been vertically released and holding them in a horizontal position, said sectors (30, 31, 32, 33) being carried by force sensors (34, 36, 35, 37) integrally connected to the frame (38) of said installation;
- means (17) for processing the signals emitted by said sensors;
- means (15) for calculating the weights of said shellfish, notably said oysters (26);
constituting said weighing apparatus *per se,* and
b) on the other hand:
- at least one series of means (53) for tipping over said buckets (3) distributed around said plate (1), preferably two sets of six, each corresponding to an emptying hopper (22) for said shellfish, notably said oysters (26), having a specified size selected preferably from six sizes;
- means (27) for controlling said tipping means (53) as a function of said weights;
- means (47, 56) for controlling said installation;
- means (46) for displaying the operational state of said installation.

12. Installation for sizing shellfish, notably oysters, according to claim 11, **characterised in that** it comprises at least one ramp (28) for returning said buckets (3) to their upright position after they have been tipped over.

13. Installation for sizing shellfish, particularly oysters, according to either of the preceding claims 11 or 12, **characterised in that** it comprises data input means (47), preferably of the "keypad" type, notably for inputting ranges of weights corresponding to a plurality of said sizes, preferably over 150 g, from 111 g to 150 g, from 86 g to 110 g, from 66 g to 85 g, from 46 g to 65 g, from 30 g to 45 g, respectively, for sizes 0, 1, 2, 3, 4 or 5 of the oysters (26).

14. Installation for sizing shellfish, particularly oysters, according to claim 13, **characterised in that** the tolerance in said ranges is less than 2 grams.

15. Installation for sizing shellfish, particularly oysters, according to either of the preceding claims 13 or 14, **characterised in that** it comprises alarm means (55) and instant stopping means (65) if a weight is detected which is outside said ranges.

16. Installation for sizing shellfish, particularly oysters, according to any one of the preceding claims 11 to 15, **characterised in that** it comprises means (58) for printing the statistical information preferably relating to the totals by size, and daily, monthly and annual tonnages.

17. Installation for sizing shellfish, particularly oysters, according to any one of the preceding claims 11 to 16, **characterised in that** it comprises first communicating means (56) associated with remote holding means, and second communicating means associated with means for analysing and storing external data (45), preferably of the "personal computer" type.

## Patentansprüche

1. Verfahren zum fortlaufenden Wiegen von Gegenständen, umfassend:
(a) automatisches Einsetzen der Gegenstände (26) einzeln in sich bewegende Aufnahmeschalen (3) oder dergleichen, deren Aufeinanderfolge eine geschlossene Kette bildet;
(b) nacheinander Hinleiten der Aufnahmeschalen (3) zu ersten automatischen Wägeeinrichtungen (5, 7);
(c) Bestimmen der Bruttogewichte, die die Gewichte der die Gegenstände (26) enthaltenden Aufnahmeschalen (3) darstellen, mittels der ersten Wägeeinrichtungen (5, 7);
(d) vorhergehendes aufeinander folgendes Hinführen der leeren Aufnahmeschalen (13) zu zweiten automatischen Wägeeinrichtungen (6, 8);
(e) vorheriges Ermitteln der Taren, die die Gewichte der leeren Aufnahmeschalen (3) darstellen, mit Hilfe der zweiten automatischen Wägeeinrichtungen (6, 8);
(f) Berechnen der Nettogewichte, die die Gewichte der Gegenstände (26) darstellen, durch Abziehen der Taren von den Bruttogewichten;
**dadurch gekennzeichnet, dass** die Taren unmittelbar vor dem Befüllen der Aufnahmeschalen (3) bestimmt werden.

2. Verfahren zum fortlaufenden Wiegen von Gegenständen nach Anspruch 1, **dadurch gekennzeichnet, dass** die Ermittlung mit Hilfe der ersten Wägeeinrichtungen (5, 7) der laufenden Bruttogewichte entsprechend dem Gewicht der gefüllten Aufnahmeschale (12), die der sich im Füllvorgang befindenden Aufnahmeschale (14) in Bewegungsrichtung der Kette unmittelbar vorangeht, gleichzeitig mit der Ermittlung der laufenden Tara mit Hilfe der zweiten Wägeeinrichtungen (6, 8) ausgeführt wird, die dem Gewicht der leeren Aufnahmeschale (13) entspricht, die der sich im Füllvorgang befindlichen Aufnahmeschale (14) unmittelbar folgt.

3. Verfahren zum fortlaufenden Wiegen von Gegenständen nach Anspruch 2, **dadurch gekennzeichnet, dass** das laufende Bruttogewicht und das laufende Nettogewicht aus dem Mittelwert mehrerer, vorzugsweise 15, Messungen resultieren.

4. Verfahren zum fortlaufenden Wiegen von Gegenständen nach Anspruch 3, **dadurch gekennzeichnet, dass** die Messungen mit schneller Taktfolge, vorzugsweise 50 Messungen pro Sekunde, ausgeführt werden.

5. Verfahren zum fortlaufenden Wiegen von Gegenständen nach Anspruch 3, **dadurch gekennzeichnet, dass** die Messungen direkt (DMA) in den Datenspeicher (44) einer zentralen Verarbeitungseinheit (15) durch eine schnelle serielle Schnittstelle (41) vorzugsweise mit 38.400 Baud übertragen werden.

6. Vorrichtung zum fortlaufenden Wiegen von Gegenständen, die zur Ausführung des Verfahrens nach einem der Ansprüche 1 bis 5 geeignet ist, enthaltend:
eine Aufeinanderfolge von sich in Bewegung befindlichen Aufnahmeschalen (3) oder dergleichen, die dazu bestimmt sind, die Gegenstände (26) einzeln aufzunehmen;
Einrichtungen (2, 28, 29) zum Führen der Aufnahmeschalen (3) längs einer geschlossenen Bahn;
Antriebseinrichtungen (1) für die Aufnahmeschalen (3);
Fülleinrichtungen für die Aufnahmeschalen (3) in einer Füllzone (10);
erste automatische Wägeeinrichtungen (5, 7) für die die Gegenstände (26) enthaltenden Aufnahmeschalen (3) während ihrer Bewegung längs der genannten Bahn;
zweite automatische Wägeeinrichtungen (6, 3) für die leeren Aufnahmeschalen (3) während ihrer Bewegung längs der genannten Bahn;
**dadurch gekennzeichnet, dass** die zweiten Wägeeinrichtungen (6, 8) der genannten Füllzone (10) der Aufnahmeschalen (3) längs der genannten Bahn in Bewegungsrichtung unmittelbar vorangehen.

7. Vorrichtung zum fortlaufenden Wiegen von Gegenständen nach Anspruch 6, **dadurch gekennzeichnet, dass** die ersten und zweiten Wägeeinrichtungen (5, 6, 7, 8) jeweils einen ersten Sektor (30, 32) und einen zweiten Sektor (31, 33) der Führungseinrichtungen (2, 28, 29) aufweisen, die einzig durch einen ersten und einen zweiten Kraftmessfühler (34, 36, 35, 37) mit dem Rest der Führungseinrichtungen (2, 28, 29) verbunden sind.

8. Vorrichtung zum fortlaufenden Wiegen von Gegenständen nach Anspruch 7, **dadurch gekennzeichnet, dass** die Führungseinrichtungen (2, 28, 29) wenigstens eine horizontale Schiene (29) enthalten, die die Aufnahmeschalen (3) vertikal trägt und mit einem Gestell (38) fest verbunden ist, und dass die ersten und zweiten Messfühler (34, 36, 35, 37) jeweils einerseits mit dem ersten Sektor (30, 32) und dem zweiten Sektor (31, 33) dieser Schiene und andererseits mit dem Gestell (38) fest verbunden sind.

9. Vorrichtung zum fortlaufenden Wiegen von Gegenständen nach Anspruch 8, **dadurch gekennzeichnet, dass** die Messfühler (34, 36, 35, 37) auf Torsion und auf Querkräfte unempfindlich und vorzugsweise vom Typ mit Mittellager sind, enthaltend mehrere Dehnungsmessstreifen, die an einem verformbaren Parallelogramm kleben, was insbesondere eine Genauigkeit von besser als 0.02 N bietet.

10. Vorrichtung zum fortlaufenden Wiegen von Gegenständen nach Anspruch 9, **dadurch gekennzeichnet, dass** die Wägeeinrichtungen (5, 6, 7, 8) enthalten:
Verstärkungseinrichtungen für Analogsignale, die von den Messfühlern (34, 36, 35, 37) abgegeben werden;
Einrichtungen (40) zum Umwandeln der Analogsignale in digitale Signale;
Einrichtungen (39) zum Speichern der digitalen Signale in eine Warteschlange, vorzugsweise vom Typ "FIFO";
Übertragungseinrichtungen (41) für die digitalen Signale, vorzugsweise durch eine Serienverbindung;
Verarbeitungseinrichtungen (39), die jeweils für einen der Messfühler (34, 36, 35, 37) vorgesehen sind, vorzugsweise vom Typ Mikrokontroller oder dergleichen;
eine Zentraleinheit (42) vom Typ Mikroprozessor oder dergleichen;
Empfangseinrichtungen (41) für die digitalen Signale und Einrichtungen zum direkten Übertragen in den Datenspeicher (44), vorzugsweise vom Typ "SRAM" der Zentraleinheit (42);
Einrichtungen zum Programmieren der Zentraleinheit (42), vorzugsweise enthaltend einen Programmspeicher (43) vom Typ "FLASH" zum laufenden Bestimmen der Gewichte der Gegenstände (26) in Abhängigkeit von den digitalen Signalen.

11. Anlage zum Sortieren von Muscheln, insbesondere von Austern, nach Gewicht durch Ausführen des Verfahrens nach einem der Ansprüche 1 bis 5 und mit einer Vorrichtung zum fortlaufenden Wiegen nach einem der Ansprüche 6 bis 10, **dadurch gekennzeichnet, dass** sie enthält:
(a) einerseits:
eine horizontale Drehplatte (1), die wenigstens eine Serie Zellen (2) aufweist, die auf einem Kreis verteilt sind, vorzugsweise zwei Serien von 18 Zellen, die auf zwei konzentrischen Kreisen verteilt sind;
wenigstens eine Serie Aufnahmeschalen (3) oder dergleichen, die in den Zellen (2) angeordnet sind und die an ihren vorderen Rändern (24) mit den hinteren Rändern (25), den Zellen (2) gegenüberliegend gelenkig verbunden sind und normalerweise in horizontaler Position durch Sperreinrichtungen gesperrt sind;
Einrichtungen (9) zum Befüllen der Aufnahmeschalen (3) mit den Muscheln und insbesondere den Austern (26);
wenigstens zwei kreisförmige und konzentrische Sektoren (30, 31, 32, 33) der Schienen (29) auf beiden Seiten der Zellen (2), die die vertikal freigegebenen Aufnahmeschalen tragen und sie in horizontaler Position halten, wobei die Sektoren (30, 31, 32, 33) von Kraftmessfühlern (34, 36, 35, 37) getragen werden, die mit dem Gestell (38) der Anlage fest verbunden sind;
Verarbeitungseinrichtungen (17) für die von den Messfühlern abgegebenen Signale;
Berechnungseinrichtungen (15) für die Gewichte der Muscheln und insbesondere der Austern (26);
die die Wiegevorrichtung als solche bilden, und
(b) andererseits:
wenigstens eine Serie Umkippeinrichtungen (53) für die Aufnahmeschalen (3), die um die Platte (1) verteilt sind, vorzugsweise zwei Serien zu sechs, wobei jede einem Trichter (2) zum Abführen der Muscheln und insbesondere der Austern (26) entspricht und ein bestimmtes Kaliber haben, das vorzugsweise eines von sechs Kalibern ist;
Steuereinrichtungen (27) für die Umkippeinrichtungen (53), die in Abhängigkeit von den Gewichten wirken;
Steuereinrichtungen (47, 56) der Anlage;
Einrichtungen (46) zum Anzeigen des Funktionszustandes der Anlage.

12. Anlage zum Sortieren von Muscheln, insbesondere von Austern, nach Gewicht durch Ausführen des Verfahrens nach Anspruch 11, **dadurch gekennzeichnet, dass** sie wenigstens eine Rampe (28) für das Rückschwenken der Aufnahmeschalen nach dem Umkippen hat.

13. Anlage zum Sortieren von Muscheln, insbesondere von Austern, nach Gewicht durch Ausführen des Verfahrens nach einem der vorangehenden Ansprüche 11 oder 12, **dadurch gekennzeichnet, dass** die Datenerfassungseinrichtungen (47), vorzugsweise eine Tastatur, insbesondere für Gewichtskorridore entsprechend mehrerer Kaliber enthält, vorzugsweise mehr als 150 g, von 111 g bis 150 g, von 86 g bis 110 g, von 66 g bis 85 g, von 46 g bis 65 g, von 30 g bis 45 g entsprechend Kalibern Nummer 0, 1, 2, 3, 4 oder 5 von Austern (26).

14. Anlage zum Sortieren von Muscheln, insbesondere von Austern, nach Gewicht durch Ausführen des Verfahrens nach Anspruch 13, **dadurch gekennzeichnet, dass** die Toleranz der genannten Korridore unter 2 Gramm liegt.

15. Anlage zum Sortieren von Muscheln, insbesondere von Austern, nach Gewicht durch Ausführen des Verfahrens nach einem der vorhergehenden Ansprüche 13 oder 14, **dadurch gekennzeichnet, dass** sie Alarmeinrichtungen und Einrichtungen (65) zum sofortigen Anhalten im Falle der Ermittlung eines Gewichts außerhalb der genannten Korridore enthält.

16. Anlage zum Sortieren von Muscheln, insbesondere von Austern, nach Gewicht durch Ausführen des Verfahrens nach einem der vorangehenden Ansprüche 11 bis 15, **dadurch gekennzeichnet, dass** sie Druckeinrichtungen (58) für Statistiken enthält, die sich bevorzugt auf Kumulierungen nach Kalibern, auf tägliche, monatliche und jährliche Tonnagen beziehen.

17. Anlage zum Sortieren von Muscheln, insbesondere von Austern, nach Gewicht durch Ausführen des Verfahrens nach einem der vorhergehenden Ansprüche 1 bis 16, **dadurch gekennzeichnet, dass** sie erste Übertragungseinrichtungen (56) enthält, die Fernsteuereinrichtungen zugeordnet sind, und zweite Übertragungseinrichtungen enthält, die Analysen- und äußeren Datenarchiviereinrichtungen (45), vorzugsweise vom Typ PC zugeordnet sind.
